# EUROPÄISCHE PATENTSCHRIFT

(11) **EP 2 178 809 B1**
(45) Veröffentlichungstag und Bekanntmachung des Hinweises auf die Patenterteilung: **30.03.2011**
(21) Anmeldenummer: 08786231.4
(22) Anmeldetag: 18.07.2008
(51) Int. Cl.: C05C 3/00

(54) **KALKHALTIGER STICKSTOFF-SCHWEFEL-DÜNGER UND VERFAHREN ZU DESSEN GEWINNUNG**
NITROGEN-SULPHUR FERTILISER CONTAINING CALCIUM CARBONATE AND METHOD FOR OBTAINING SAID FERTILISER
ENGRAIS CALCAIRE À BASE D'AZOTE ET DE SOUFRE ET SON PROCÉDÉ D'OBTENTION

(30) Priorität: 19.07.2007 DE 102007034278
(43) Veröffentlichungstag der Anmeldung: 28.04.2010
(73) Patentinhaber: Borealis Agrolinz Melamine GmbH, 4021 Linz (AT)
(72) Erfinder: BRUCKBAUER, Christina, A-5282 Ranshofen (AT); JÄGER, Emmerich, A-4532 Rohr (AT)
(74) Vertreter: Morawski, Birgit
(86) Internationale Anmeldenummer: PCT/EP2008/059423
(87) Internationale Veröffentlichungsnummer: WO 2009/010576

(56) Entgegenhaltungen:
- EP-A- 0 022 536
- DE-C- 882 381
- GB-A- 1 259 778
- US-A- 3 282 674

## Beschreibung

Die Erfindung betrifft das Gebiet der Düngemittel.

Das Wachstum von Pflanzen bedarf neben Wasser, Kohlendioxid und Sonnenlicht weiterhin der Hauptnährstoffe Stickstoff, Kali und Phosphat sowie Sekundärnährstoffe und Spurenelemente. Auch Schwefel ist ein lebensnotwendiger Sekundärnährstoff vor allem in der Proteinsynthese der Pflanzen, der von diesen bevorzugt als Sulfat sowohl über die Wurzel als auch über das Blatt aufgenommen wird.

In den letzten ein bis zwei Jahrzehnten ist gebietsweise eine Verarmung an Schwefel in landwirtschaftlich genutzten Böden festzustellen. Diese wird durch die Verminderung der Schwefelemissionen infolge vermehrter Rauchgasentschwefelung und Reduktion des Schwefelgehaltes in Treibstoffen hervorgerufen. Durch die Luft-Reinhaltungsmaßnahmen haben sich die Schwefeleinträge aus der Atmosphäre von bis zu 100 kg/ha in den 80er Jahren auf durchschnittlich etwa 6 kg/ha reduziert. Der Schwefelentzug durch Pflanzen muss durch Schwefelgaben über gezielte Düngungsmaßnahmen ergänzt werden.

Die Nachfrage nach schwefelhaltigen Düngern, insbesondere nach Stickstoffeinzeldüngern mit Schwefel, ist steigend. Schwefel und Stickstoff wirken in der Pflanze gemeinsam. Dies wird aus den Gehalten an Stickstoff und Schwefel in der Pflanzenmasse deutlich. Bei optimaler Versorgung findet man in den Pflanzen ein Verhältnis von Stickstoff zu Schwefel von mindestens 10:1. Wird dieses Verhältnis zu Ungunsten des Schwefelgehalts verändert, ist mit Ertrags- und Qualitätseinbußen durch Schwefelmangel zu rechnen. Mit dem Erntegut werden je nach Kultur pro 10 kg Stickstoff und in der Regel auch 1 bis 4 kg Schwefel vom Feld abgefahren.

US 3282674 beinhaltet ein Düngemittel, enthaltend Ammoniumsulfat, Ammoniumnitrat, 0.1 bis 2.0 Massenprozent Magnesiumnitrat, Magnesiumsulfat, Calciumnitrat und 0.1 bis 2.0 Massenprozent Calcium Carbonat, Magnesium Carbonat, Dolomit, Ammoniak etc. Der Massenanteil von Ammoniumsulfat ist zum Beispiel 52 Massenprozent und von Ammoniumnitrat ist 43 Massenprozent. Das Düngemittel kann auch Ammoniumnitrat und Ammoniumsulfat als Doppelsalz 2NH₄NO₃ x (NH₄)₂SO₄

Eine Möglichkeit, einen Schwefel enthaltenden Stickstoffeinzeldünger herzustellen, ist die Produktion eines Ammonsulfatsalpeters, einer Mischung aus Doppelsalzen der Zusammensetzung 1-3 NH₄NO₃ * (NH₄)₃SO₄ und überschüssigem Ammoniumsulfat. Ein solcher Ammonsulfatsalpeter ist das Salz einer schwachen Base und zweier starken Säuren und reagiert damit in wässriger Lösung schwach sauer. Im Folgenden bezeichnet die Vorsilbe "Ammon" das Ammoniumion. Er besteht also im Wesentlichen aus den Salzen Ammonnitrat und Ammonsulfat in verschiedenen Kristallformen.

Zur Herstellung von Ammonsulfatsalpeter existieren unterschiedliche Verfahren. Eine Übersicht ist in Kirk Othmer, "Encyclopedia of Chemical Technology", 3. Auflage, Volumen 10, 1980, Seite 49 gegeben.

Grundsätzlich können die Verfahren zur Herstellung von Ammonsulfatsalpeter in drei Gruppen eingeteilt werden.

Die erste Gruppe beinhaltet Verfahren basierend auf der Neutralisation von Schwefelsäure und Salpetersäure mit Ammoniak und Granulierung der entstehenden Ammonsulfatsalpeter-Schmelze. Diese Verfahren sind in den Patenten GB 798 690 (1958), GB 1 049 782 (1963) und US 2762699 (1957) beschrieben.

Die zweite Gruppe beinhaltet Verfahren zur Herstellung von Ammonsulfatsalpeter basierend auf den Schmelzen von Ammoniumsulfat-Salzen und Ammonnitrat-Salzen. Meist wird festes Ammoniumsulfat einer Schmelze von Ammoniumnitrat beigemengt und zum Düngergranulat verarbeitet. Verfahren sind beispielsweise in EP 1 595 80 (2005) und GB 1 005 166 (1965; BASF) publiziert.

Die dritte Gruppe basiert auf der Herstellung einer übersättigten Mischung von Ammoniumnitrat und Ammoniumsulfat und dessen Granulation auf getrocknetem Kreislaufprodukt, üblicherweise in einem Trommelgranulator oder Schneckengranulator. Solche Verfahren sind beispielsweise in den Patenten GB 1259 778 (1972, Fisonds Ltd.) und US 3 635 691 (1972) beschrieben.

Ammonsulfatsalpeter ist weniger hygroskopisch als Ammonnitrat, tendiert jedoch aufgrund weiterer Reaktionen bei der Lagerung zum Verbacken. In der Literatur ist die Zugabe von Additiven wie Eisen- oder Aluminiumsalzen zur Verbesserung der Produkteigenschaften beschrieben, beispielsweise in DE 972197 oder GB 1 259 778.

Ein wichtiger Nachteil des Ammonsulfatsalpeters bei der Anwendung auf dem Feld sind dessen saure Eigenschaften in wässriger Lösung, welche bei langfristiger Anwendung zur Schädigung des Bodens durch Auswaschen von Mineralien und Änderung der Bodenbiologie führen. Wird Ammonsulfatsalpeter über lange Zeit angewendet und der Boden nicht genügend gekalkt, erhöht sich dessen Azidität. Damit verschlechtern sich die chemischen Eigenschaften des Bodens. Aufgrund der ständigen pH-Wertsenkung des Bodens durch den Transformationsprozess des ammoniakalischen Stickststoffs über die Nitritform zur Nitratform wird die Bodenkalkung immer wichtiger.

Es ist deshalb wünschenswert, ein einfaches Verfahren zu finden, wodurch der saure Ammonsulfatsalpeter mit Kalk kombiniert werden kann. Kalk kompensiert durch seine alkalische Reaktion in Lösung die pH-Wert-Erniedrigung. Mit einem solchen Verfahren soll ein für die Feldaufbringung geeigneter kalkhaltiger Stickstoff-Schwefel-Dünger zur Verfügung gestellt werden.

Diese Aufgabe wird gelöst durch ein kalkhaltiges Ammonsulfatsalpeter-Düngemittel sowie ein Verfahren zu dessen Herstellung gemäß den unabhängigen Ansprüchen.

Gegenstand der Erfindung ist ein Verfahren zur Herstellung von Kalk- und/oder Calcium- und/oder Magnesiumcarbonat oder -hydrogencarbonat enthaltendem Stickstoff-Schwefel-Dünger, welches dadurch gekennzeichnet ist, dass eine Ammonsulfatsalpeter-Schmelze oder - Lösung hergestellt, mit Kalk oder entsprechenden Calcium- oder Magnesiumsalzen in einer Mischvorrichtung vermischt und durch Granulation der Mischung ein Düngemittel gewonnen wird.

Das Verfahren ist dadurch gekennzeichnet, dass die Ammonsulfatsalpeter-Schmelze oder -Lösung mittels einem der oben beschriebenen Verfahren zur Herstellung von Ammonsulfatsalpeter hergestellt werden kann und anschließend durch Beigabe von Kalk oder Dolomit (dolomitischer Kalk) zum erfindungsgemäßen Stickstoff-Schwefel-Dünger weiterverarbeitet wird.

Das durch ein solches Verfahren herstellbare Düngemittel ist ebenfalls Gegenstand der vorliegenden Erfindung.

Die Zugabe von Kalk bzw. Dolomit kann in herkömmlichen Mischapparaturen wie zum Beispiel in einem Rührkessel erfolgen.

Vorteilhafterweise erfolgt die Zugabe von Kalk bzw. Dolomit in zwei Schritten, wobei ein Teil des Kalkes in einer Mischapparatur zugegeben wird und ein weiterer Teil des Kalkes später im Granulationsapparat zugegeben wird.

Es ist jedoch auch möglich, den gesamten Kalk direkt in den Granulationsapparat einzubringen. Dies ist insbesondere von Vorteil, wenn es sich um einen Schneckengranulator handelt.

Das erfindungsgemäß gewonnene Produkt kann in herkömmlichen Granulationsapparaten wie Granuliertrommeln oder Schneckengranulatoren granuliert und leicht in eine Anlage zur Herstellung von Ammonsulfatsalpeter oder in einen Produktionsverbund zur Herstellung anderer Düngemittel, wie eine Nitrophosphatanlage, integriert werden.

Die Ammonsulfatsalpeter-Schmelze bzw. -Lösung kann nach jedem beliebigen Verfahren hergestellt werden. Wesentlich ist jedoch, dass diese bei einer Temperatur vorliegt, bei welcher das Gemisch noch formbar ist und eine Granulation stattfinden kann. Dies sind in der Regel Temperaturen zwischen 140°C und 160°C. Das Verhältnis von Ammoniumnitrat zu Ammoniumsulfat in der Ammonsulfatsalpeter-Schmelze bzw. Lösung sollte 40:60 bis 60:40 betragen, damit eine Ausbildung der gewünschten Doppelsalze möglich ist.

Ist es nicht möglich eine Ammonsulfatssalpeter-Schmelze oder -Lösung mit den oben genannten Eigenschaften herzustellen, kann ein Teil des Ammoniumnitrats oder des Ammoniumsulfats auch später beispielsweise gleichzeitig mit dem Kalk in die Mischapparatur oder direkt in den Granulierapparat eingebracht werden, um den gewünschten Nährstoffgehalt im Produkt zu erzielen. Dies kann auch von Vorteil sein, weil sich die Doppelsalze 2 NH₄NO₃ * (NH₄)₂SO₄ bei einem geringeren Anteil an Ammoniumnitrat in der Schmelze schneller bilden können.

Es ist von Vorteil, dass die Ammonsulfatsalpeter-Schmelze bzw. - Lösung einen Wasseranteil von zwischen 4 und 10 Massenprozent aufweist, damit sie einerseits noch gut mit Kalk vermengt und andererseits die entstehende kalkhaltige Suspension in den herkömmlichen Granulierapparaten ohne hohen Energieeintrag granuliert werden kann.

Ebenfalls ist von Vorteil, wenn die Ammonsulfatsalpeter-Schmelze bzw. -Lösung bei hohen Temperaturen vorliegt, insbesondere bei Temperaturen zwischen 140 und 160°C, damit bei der Zugabe von Kalk bzw. Dolomit die kalkhaltige Suspension nicht auskühlt. Temperaturen über 180°C sollten vermieden werden, da bei diesen Temperaturen bereits eine thermische Zersetzung des Ammoniumnitrats möglich ist.

Weiter ist von Vorteil, wenn in der Ammonsulfatsalpeter-Schmelze bzw. -Lösung bereits gegebenenfalls erforderliche Additive wie Eisen oder Aluminium vorhanden sind, welche gute Lagereigenschaften des fertigen Düngemittels ermöglichen.

Besonders vorteilhaft ist es, wenn die Ammonsulfatsalpeterschmelze eine Doppelsalzschmelze ist, welche durch Neutralisation von Schwefelsäure mit Ammoniak in der Gegenwart von Ammoniumnitrat hergestellt wird. Bevorzugter Weise liegen die gebildeten Ammoniumsalze als Doppelsalz 2 NH₄NO₃ * (NH₄)₂SO₄ vor. Wenn die Reaktion der Doppelsalzbildung erst im Lager stattfindet, kann es zu einem Verhärten des Stickstoff-Schwefel-Düngers im Lager kommen.

Die Reaktion wird bevorzugt in einem pH-Bereich von ph=1 bis ph=7, insbesondere im pH-Bereich von ph=2 bis ph=6 durchgeführt.

Da der pH-Wert der Ammonsulfatsalpeter-Schmelze bzw. -Lösung meist niedrig ist, ist eine Neutralisation dieser Schmelze bzw. Lösung vor der Kalkzugabe erforderlich. Die Neutralisation kann beispielsweise durch Zugabe von Ammoniak erfolgen.

Es ist jedoch auch möglich, die Ammonsulfatsalpeter-Schmelze bzw. Lösung mit einem Teil des Kalkes zu neutralisieren. Auf diese Weise wird in der calciumhaltigen Suspension Gips gebildet, während Kohlendioxid abgezogen wird.

Bei Herstellungsverfahren von Ammonsulfatsalpeter-Schmelzen, die von festem Ammonsulfat und Ammoniumnitrat ausgehen, besteht die Möglichkeit, den Kalk- oder Dolomitanteil gemeinsam mit dem festen Ammonsulfat in die Ammoniumnitrat-Schmelze einzubringen. In diesem Falle ist es von Vorteil, wenn das Düngemittel durch Kompression zwischen rotierenden Walzen geformt wird.

Als Kalk kann jede beliebige Kalkquelle herangezogen werden, besonders vorteilhaft ist es jedoch, wenn der im Nitrophosphat-Prozess anfallende Kalk verwendet wird. In einer besonders bevorzugten Ausführungsform ist das Verfahren in eine Anlage zur kontinuierlichen Herstellung von Komplexdünger nach dem Nitrophosphatverfahren integriert. Üblicherweise ist an die Nitrophosphatanlage eine Anlage zur Gewinnung von Kalkammonsalpeter gekoppelt. Diese kann mit einer Anlage zur Herstellung von kalkhaltigem Stickstoff-Schwefeldünger kombiniert werden. Die Produkte Kalkammonsalpeter und der kalkhaltige Stickstoff-Schwefeldünger werden mit Vorzug abwechselnd in ein und derselben Anlage produziert. Auf diese Weise ist es möglich, in einem einfachen Verfahren als Kuppelprodukt des Komplexdüngers kalkhaltigen Stickstoff-Schwefeldünger herzustellen.

Die Kalkammonsalpeteranlage weist üblicherweise eine Granuliereinheit auf, welche zur Granulierung von kalkhaltigem Stickstoff-Schwefeldünger genutzt werden kann.

Anstelle von reinem Calciumcarbonat kann auch dolomitischer Kalk verwendet werden. Dieser enthält neben Calciumcarbonat auch Magnesiumcarbonate. Im Weiteren sind die Angaben "Kalk", "Calciumcarbonat" und "Dolomit" bzw. "dolomitischer Kalk" austauschbar, soweit es sich nicht explizit um die Eigenschaften des dolomitischen Kalks hinsichtlich seines Magnesiumgehalts handelt. Das Verfahren erlaubt die Herstellung eines Düngemittels, enthaltend einen Massenanteil Ammoniumsulfat, einen Massenanteil Ammoniumnitrat und einen Massenanteil umfassend Kalk und / oder ein Carbonat und/oder ein Hydrogencarbonat von Magnesium und/oder Calcium, wobei der Massenanteil umfassend Kalk und/oder ein Carbonat und/oder ein Hydrogencarbonat von Magnesium und/oder Calcium mindestens 5 bis 25 Massenprozent, insbesondere 8 bis 20 Massenprozent, und der Massenanteil von Ammoniumsulfat mindestens 5 Massenprozent, bevorzugt 5. bis 85 Massenprozent, insbesondere bevorzugt 30 bis 50 Massenprozent des Düngemittels beträgt.

Der Gehalt an Kalk bzw. Calciumcarbonat, oder an dolomitischem Kalk, eines erfindungsgemäßen Düngemittels wird, soweit nicht anders spezifiziert, in Massenprozent angegeben. Üblicherweise wird hierzu im fertig gestellten Düngemittel der Calcium (Ca²⁺)- und der Magnesium(Mg²⁺)gehalt analytisch mittels Komplexometrie bestimmt und als Calciumcarbonat beziehungsweise Magnesiumcarbonat berechnet. Soweit das Calciumcarbonat weitere mindere Bestandteile, wie beispielsweise Magnesiumsalze, enthält, so soll der Anteil dieser Komponente so berechnet werden, als wenn diese nur aus Calciumcarbonat bestünde, das heißt, der Masseanteil des Minderanteils wird herausgerechnet. Wenn z.B. 100 kg erfindungsgemäßen Düngemittels 10% eines Calciumcarbonat-Minerals enthält, welches seinerseits 10% eines Magnesiumsalzes enthält, so wäre der Massengehalt des Düngemittels an Calciumcarbonat 9%.

Der erfindungsgemäße Stickstoff-Schwefeldünger enthält mindestens 1,5 Massenprozent Kalk, um die Sicherheit beim Transport und bei der Lagerung des Düngemittels zu erhöhen. Er enthält bevorzugter Weise 5-20 % Kalk, insbesondere 10-16 % Kalk. Auf diese Weise werden die als negativ zu bewertenden sauren Eigenschaften des Ammonsulfatsalpeters vermindert und gleichzeitig ein hoher Gehalt der Nährstoffe Stickstoff und Schwefel erzielt.

Anstelle von reinem Calciumcarbonat kann auch dolomitischer Kalk eingesetzt werden, so dass das Düngemittel einen Anteil an Magnesium in Form von Magnesiumcarbonaten enthält. Bevorzugt ist eine Menge von 2 bis 4 Massenprozent Magnesium. In Gegenwart von Calcium beeinflusst Magnesium den pH-Wert des Bodens und auch die Humusbildung günstig. Magnesium kann auch in Form von Magnesiumoxid zugegeben werden.

Weiterhin enthält der erfindungsgemäße Stickstoff-Schwefeldünger mindestens 5 Massenprozent Ammoniumsulfat. Bevorzugter Weise enthält er zwischen 30 und 50 Ammoniumsulfat, entsprechend einem Schwefelanteil im Endprodukt von zwischen 7 und 12 %. Auf diese Weise wird in das Düngemittel neben Ammonsulfat und Kalk ausreichend Ammoniumnitrat eingebracht und ein hoher Anteil an Stickstoff im erfindungsgemäßen Dünger erreicht. Zudem wird über Ammoniumnitrat Stickstoff in Form von rasch pflanzenverfügbarem Nitratstickstoff eingebracht. Der Massenanteil des Ammoniumnitrats beträgt im Düngemittel 5 bis 55 Massenprozent, bevorzugt 35 bis 45 Massenprozent.

Die Granulation des erfindungsgemäßen kalkhaltigen Stickstoff-Schwefeldüngers erfolgt in den für eine Düngemittelanlage üblichen Granulationseinheiten, z. B. in einer Granuliertrommel oder einem Schneckengranulator.

Besonders bevorzugt ist jedoch die Granulation durch Aufsprühen auf ein Granulationsbett in einer rotierenden Trommel (Granuliertrommel). Dabei beträgt die Temperatur des Rückguts mit Vorzug zwischen 100 und 150°C und die Temperatur der Düngermaische zwischen 145 und 160°C. Ist die Differenz der Temperaturen von Rückgut und Düngermaische zu groß, kann dies durch das rasche Abkühlen der Schmelze zu ungewünschten Kristallbildungen führen.

Der so hergestellte Ammonsulfatsalpeter (ASS) mit bis zu 25 % Kalk (CaCO₃) wirkt weniger bodenversauernd als herkömmliche Düngemittel auf Ammon-Sulfat-Salpeter (ASS)-Basis und stellt gleichzeitig Calcium zur Verfügung. Auf Standorten, wo Schwefel fehlt, fehlt zumeist auch Kalk. Die Aufbringung von saurem Ammonsulfatsalpeter ohne Pufferung durch Kalk kann dabei den Mangel an Calcium verschlimmern, da saure ASS-Düngemittel mit -187,5 kg CaO pro 100 kg N stark kalkzehrend wirken.

Grundlage für die finanzielle Bewertung der basisch wirksamen Inhaltsstoffe in Düngemitteln ist die Kalkwert- (besser Basenwert-) Formel von Sluijsmans (1970). Diese Formel lautet: E (kg CaO / 100 kg Dünger) = 1,0 x CaO + 1,4 x MgO + 0, 6 x K₂O + 0,9 x Na₂O - (0,4 x P₂O₅ + 0,7 x SO₃ + 0,8 x Cl + 1,0 x N). In der nachfolgenden Tabelle sind für einige Stickstoff-Schwefeldünger die Basenwerte angegeben:

| | kg CaO/100 kg Dünger | kg CaO/100 kg N |
|---|---|---|
| Ammonsulfatsalpeter (ASS 26N+13S) | - 48,75 | - 187,5 |
| Erfindungsgemäßer Dünger mit der Formulierung 24N+9S | -38,1 | - 158,7 |
| Erfindungsgemäßer Dünger mit der Formulierung 22N+8S | -23,35 | - 106,1 |

Bei der Zugabe von Kalk auf bereits mit ASS-Düngemitteln gedüngte Böden hingegen besteht die Gefahr, durch unkontrollierte Erhöhung der pH-Werte die Ausgasung von Stickstoff zu bewirken, da Calciumcarbonat durch seine alkalische Wirkung Ammoniumsalze teilweise zu flüchtigem Ammoniak deprotoniert.

Demgegenüber weist das erfindungsgemäße Düngemittel den Vorteil auf, dass die Anteile von Ammoniumsalz und Calciumcarbonat so aufeinander abgestimmt sind, dass die Abgasung von Ammoniak und damit der Verlust von der Pflanze zur Verfügung stehendem Stickstoff minimiert ist. Daher ist Calciumcarbonat als Kalkzusatz auch zu ASS besonders gut geeignet. Zudem wird durch die gleichzeitige Ausbringung von Kalkdünger und Stickstoff-Schwefel-Dünger in einem Schritt die Arbeitseffizienz der Landwirte gesteigert.

Das im erfindungsgemäßen Dünger angestrebte Verhältnis von Stickstoff zu Schwefel von 1:4 bis 1:2 entspricht optimal dem Nährstoffbedarf der Pflanze, da wie einleitend beschrieben wegen des engen Zusammenspiels von Stickstoff und Schwefel in der Pflanze den Kulturen während der gesamten Wachstumsperiode ausreichend Schwefel in aufnehmbarer Form zu Verfügung stehen muss. Schwefelmangel führt unter anderem zu ungenügender Stickstoffauswertung durch die Pflanze und in Folge zu Qualitätsminderung und Mindererträgen.

Weiterhin ist in dem erfindungsgemäßen Düngemittel Stickstoff sowohl in Form von Ammoniumstickstoff als auch von Nitratstickstoff enthalten.

Gegenüber der Düngung mit sogenanntem Stickstoff-Schwefel-Düngern auf Basis von Ammoniumnitrat und Gips (Düngemitteltyp "Ammoniumnitrat mit Schwefel" z. B. 24N+6S) weist das erfindungsgemäße Düngemittel den Vorteil auf, dass der Schwefel nicht als schwer löslicher Gips, sondern pflanzenverfügbares Ammonsulfat enthalten ist. Gips (CaSO₄ * 2 H₂O), dessen Löslichkeit in Wasser gering ist (2,02 g/l bei 18°C gemäß Römpp Chemie Lexikon) wird als langsam wirkender Schwefeldünger eingestuft. Das gipshaltige Korn eines Düngers des Typs "Ammoniumnitrat mit Schwefel" bleibt also lange am Feld liegen, so dass der Schwefel praktisch nicht pflanzenverfügbar ist. Ammonsulfat ist hingegen gut wasserlöslich, so dass das Nährelement Schwefel in Form von Sulfat-Anionen rasch von der Pflanze aufgenommen werden kann

Dennoch enthält der erfindungsgemäße Dünger bei einem gleich hohem Gehalt an Stickstoff (24 Massenprozent) und bei einem möglichen Gehalt an 3 bis 20 Massenprozent Kalk um bis zu 6 % mehr Schwefel.

Auch vom Stand der Sicherheit weist das erfindungsgemäße Düngemittel Vorteile gegenüber anderen Stickstoff-Schwefel-Düngern wie Ammonsulfatsalpeter auf. Ammoniumnitrat ist für den Transport als Gefahrgut einzustufen, da es zur selbsttätigen thermischen Zersetzung neigt. Es ist bekannt, dass die Zugabe von etwa 10 % Calciumcarbonat einen stark phlegmatisierenden Effekt hat und somit die Explosionsgefährlichkeit von beispielsweise Kalkammonsalpeter auf ungefähr 12 % jener von reinem Ammoniumnitrat senkt. Da das Produkt Ammonsulfatsalpeter einen niedrigen pH-Wert aufweist, ist dieser, wenn der Gehalt an Nitraten im Düngern einen gewissen Wert übersteigt, ebenfalls als kritisch einzustufen. Durch die Zugabe von 4 bis 16 Massenprozent Kalk wird daher die Sicherheit in der Produktion und im Transport wesentlich erhöht.

Auch vom Standpunkt der Verfahrenstechnik unterscheidet sich das erfindungsgemäße Verfahren vorteilhaft vom Verfahren zur Herstellung von Düngemitteln des Typs "Ammoniumnitrat mit Schwefel". Würde in einem Produktionsverbund mit einer herkömmlichen Nitrophosphatanlage ein Ammonnitrat mit Schwefel (24N+6S) produziert, müsste das anfallende Calciumnitrat mit Schwefelsäure zu Calciumsulfat umgewandelt und das im Produktionsverbund anfallende CO₂ an die Atmosphäre abgegeben werden. Die CO₂-Bilanz würde beträchtlich belastet werden.

Vorteilhafterweise kann das im Produktionsverbund bei der Herstellung von NPK-Dünger mittels Nitrophosphat-Verfahren als Nebenprodukt anfallende Calciumnitrat im erfindungsgemäßen Verfahren verwendet werden. Das Calciumnitrat wird mit CO₂ (Nebenprodukt der NH₃-Anlage am Standort) zu Calciumcarbonat umgewandelt.

Die Produktion eines kalkhaltigen Stickstoff-Schwefel-Düngers verbessert die CO2-Bilanz in der Produktion beträchtlich. Gleichzeitig ist die pflanzenbauliche Leistung dieses N+S Düngers besser als die derzeit am Markt befindlichen.

Gemäß einer Ausführungsform wird ein Düngemittel zur Verfügung gestellt, welches
- Gesamtstickstoff von 20 bis 30 %, vorzugsweise von 22 bis 26 %, noch weiter bevorzugt 23 bis 25 %;
- Ammoniumstickstoff von 10 bis 25 %, vorzugsweise von 15 bis 20 %, noch weiter bevorzugt 16 bis 18 %;
- Nitratstickstoff von 5 bis 10 %, vorzugsweise von 6 bis 8 %;
- Wasserlösliche Schwefelverbindungen, bevorzugt Sulfate, mit einem Massenanteil von 3 bis 20 %, vorzugsweise von 7 bis 16 %, noch weiter bevorzugt 8 bis 10 % bezogen auf den Gehalt an elementarem Schwefel;
- Calcium gerechnet als Calciumcarbonat von 1,5 bis 25 %, vorzugsweise von 8 bis 20 %, noch weiter bevorzugt 12 bis 16 %;
im Bezug auf die Gesamtmasse des Düngemittels enthält.

Ferner kann es auch weitere Stoffe enthalten, die die Lagerfähigkeit verbessern und die agrochemische Effektivität des Endprodukts erhöhen.

Das Düngemittel wird bevorzugt in Form von Körnern bzw. eines Granulates verwendet, wobei die Körner eine gleichmäßig runde Form aufweisen. Die Düngemittelszusammensetzung ist dabei in jedem Korn im Mittel identisch. Dies ermöglicht eine gleichmäßige Verteilung der Düngemittelbestandteile auf dem Feld, was bei einer Mischung der Bestandteile in verschiedenen Körnern nicht gewährleistet wäre.

Die Größenverteilung des Kornes beträgt vorteilhafterweise 2 bis 3 % > 5 mm; 8-12 % 4-5 mm; 15-19 % 3,55-4 mm; 20 bis 24 % 3,15-3,55 mm; 25 bis 28 % 2-3,15 mm; 0,05 bis 0,02 % 1-2 mm; 0 % < 1mm, bevorzugt 2,5 % > 5 mm; 9,9 % 4-5 mm; 17,3 % 3,55-4 mm; 21,2 % 3,15-3,55 mm; 26,1 % 2-3,15 mm; 0,1 % 1-2 mm; 0 % < 1mm.

### Figurenbeschreibung

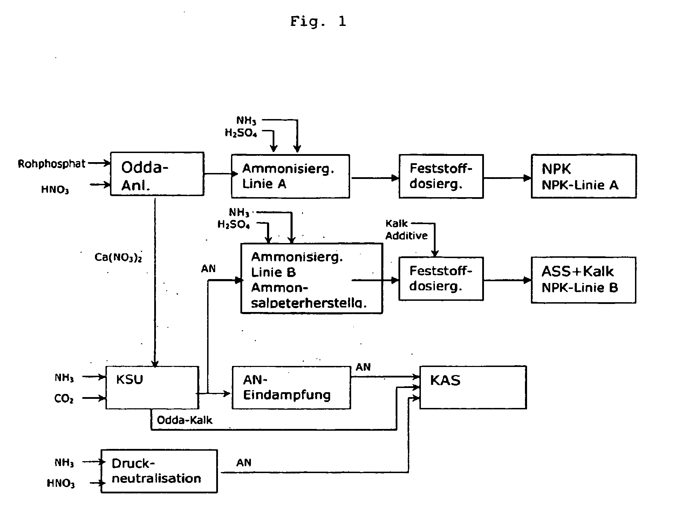

- Fig. 1: zeigt die Herstellung eines kalkhaltigen Stickstoff- Schwefel-Düngers in einer Mehrnährstoffdünger-Analge mit einer Kapazität von ca. 500 Tagestonnen im Produktionsverbund mit einer Nitrophosphat-Anlage und einer Kalkammonsalpeter- Anlage.

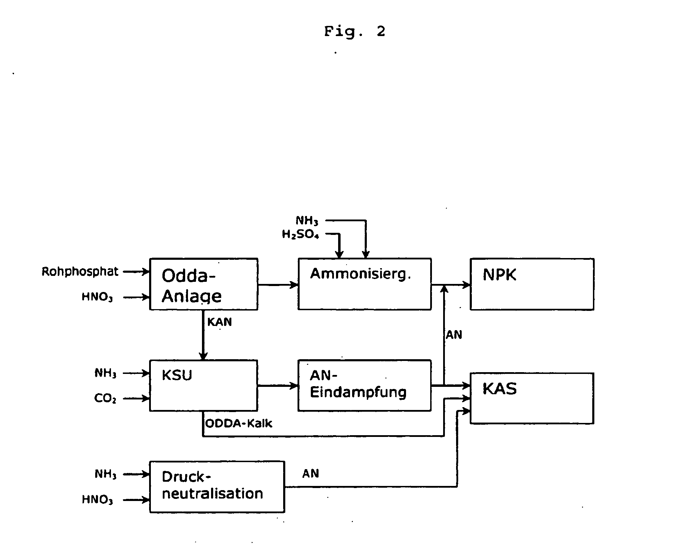

- Fig. 2: zeigt einen Produktionsverbund mit einer Nitrophosphat-Anlage und einer Mehrnährstoffdünger-Anlage (NPK) sowie einer Kalkammonsalpeter-Anlage (KAS). Die im Nitrophosphat-Prozess anfallende Calciumammonnitrat-Lösung wird in der Kalksalpeterumwandlungsanlage (KSU) zu Kalk und Ammoniumnitrat-Lösung umgewandelt. Beides dient als Rohstoff für die Kalkammonsalpeter-Produktion.
- Fig.: 3 zeigt, wie in diesen Komplex ohne große Umbaumaßnahmen die Produktion eines kalkhaltigen Stickstoff-Schwefel-Düngers integriert werden kann.

Im Einzelnen wird in Figur 1 die Herstellung des erfindungsgemäßen Düngemittels gezeigt. Ausgangspunkt ist die Eintragung von Salpetersäure und Rohphosphat in den Odda-Prozess. Das horizontal verlaufende Flussschema zeigt ausgehend vom Odda-Prozess die Gewinnung klassischen NPK (Stickstoff-Phosphor-Kali)-Düngers durch Ammonisierung mit Ammoniak und Schwefelsäure und nachfolgende Feststoffdosierung, bei der durch Zugabe von Kaliumchlorid die Kalikomponente eingeführt wird.

Ebenso kann nun das beim Odda-Prozess anfallende Calciumnitrat in eine Kalk-Salpeter-Umwandlungsanlage abgeführt werden (vertikaler Prozess). Durch Zugabe von Kohlendioxid und Ammoniak und nachfolgende Konzentration des Ammoniumnitrats durch Eindampfung kann dabei Kalkammonsalpeter (KAS) gewonnen werden.

Ebenso aber kann durch Hinzufügen einer weiteren Linie die im KSU-Reaktor entstandene Mischung aus Calciumcarbonat und Ammoniumnitrat durch Zugabe von Ammoniak und Schwefelsäure die Schwefelkomponente hinzugeführt werden, welche nach Durchlaufen der optionalen Feststoffaddition das erfindungsgemäße Düngemittel liefert (mittleres Fliesschema in Fig. 1).

Diese Anlagenkonfiguration ermöglicht den Gebrauch einer traditionellen Anlage ohne die Zufügung eines weiteren Reaktors, und die Nutzung vorhandener Granuliereinrichtungen.

Fig. 2 zeigt eine herkömmliche Anlagenkonfiguration zur Herstellung von NPK- und KAS-Dünger.

Fig. 3 zeigt die Konfiguration einer solchen in Fig. 2 gezeigten Anlage zur Produktion des erfindungsgemäßen Düngemittels durch Hinzufügung eines weiteren Reaktors, in welchem das in der KAS-Linie entstandene Ammoniumnitrat sowie der im Odda-Verfahren anfallende Kalk in einen weiteren Reaktor eingespeist wird, in dem durch Neutralisation von Schwefelsäure durch Ammoniak die Ammoniumsulfatkomponente separat bereitgestelltwird.

Auch diese Konfiguration bedient sich vorteilhafterweise den in der Anlage befindlichen Granuliereinrichtungen.

### Beispiele

### Beispiel 1:

Herstellung einer Maische eines kalkhaltigen Stickstoff-Schwefel-Düngers ausgehend von Ammonnitrat und Ammonsulfat sowie Granulation der Maische zum kalkhaltigen Stickstoff-Schwefel-Dünger im Labormaßstab.

Material: Ammonnitrat, Ammonsulfat, Kalk aus dem Nitrophosphat-Prozess, Wasser

Durchführung: Gewichtsanteile von Ammonnitrat und Ammonsulfat wurden im Verhältnis 1:9 mit wenig Wasser vermengt und am Sandbad geschmolzen. Anschließend wurden pro 100 g der entstandenen Ammonsulfatsalpeter-Schmelze 18 g Feuchtkalk (aus einer Nitrophosphat-Anlage; ca. 6 % Wasser, 0,5 % P₂O₅) zugegeben und die Mischung gut vermengt.

Die entstandene zähe Maische eines kalkhaltigen Stickstoff-Schwefel-Düngers wurde in einer Labormaschine granuliert und anschließend klassiert.

Das erhaltene Granulat eines kalkhaltigen Stickstoff-Schwefel-Düngers enthielt 23,6 % Stickstoff, davon 15,4 % Ammoniumstickstoff, 0,36 % Wasser und 8,9 % Schwefel. Dies entspricht einem Gehalt von ca. 17 % Kalk.

### Beispiel 2:

Herstellung einer Maische eines kalkhaltigen Stickstoff-Schwefel-Düngers ausgehend von Ammonnitrat-Lösung, Schwefelsäure, Ammoniak und dolomitischem Kalk sowie Granulation der Maische zum Dünger eines kalkhaltigen Stickstoff-Schwefel-Düngers im großtechnischen Maßstab in einer Produktionsanlage für Mehrnährstoffdünger (siehe auch Fig.1).

Rohstoffe: 65%-ige Ammonnitrat-Lösung, 96%-ige Schwefelsäure, Ammoniak gasförmig, dolomitischer Kalk.

Durchführung: In einer Mehrnährstoffdünger-Anlage wurden in der Ammonisierungseinheit 7,85 m3/h Ammonniumnitrat-Lösung und 3,82 m3/h Wasser mit 2,75 m3/h Schwefelsäure vermengt und mit Ammoniak bei ca. 115°C in mehreren Stufen neutralisiert. Die entstandene Ammonsulfatsalpeter-Lösung wurde anschließend mit 2,42 t/h dolomitischem Kalk und Zusätzen wie Eisensulfat vermengt. Die Maische eines kalkhaltigen Stickstoff-Schwefel-Düngers wurde im Spherodizer zu einem gleichmäßig runden Granulat geformt. Das erhaltene Produkt, ein kalkhaltiger Stickstoff-Schwefel-Dünger, wies folgende Zusammensetzung auf: 25,7 % Stickstoff, davon 15,5 % Ammonium-Stickstoff, 7,7 % Schwefel, 0,19 % Wasser, 2,09 % Magnesiumoxid.

Die Siebanalyse zeigte folgendes Ergebnis: 2,5 % > 5mm; 9,9 % 4-5 mm; 17,3 % 3,55-4 mm; 21,2 % 3,15-3,55 mm; 26,1 % 2-3,15 mm; 0,1 % 1-2 mm; 0 % < 1mm.

### Beispiel 3

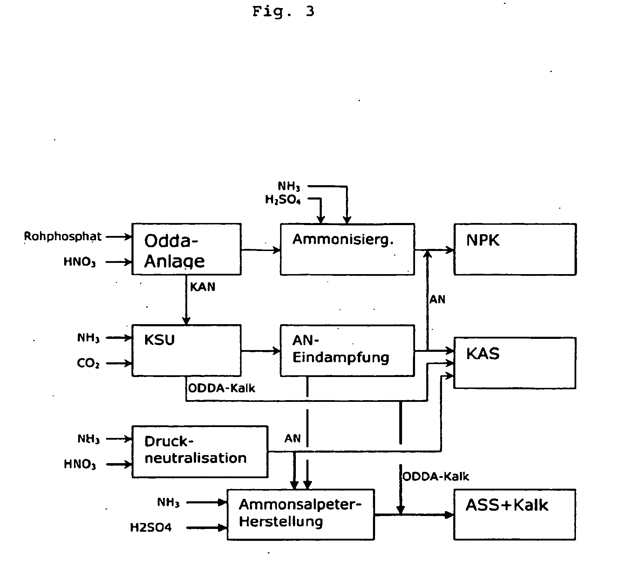

### Integration der Produktion eines kalkhaltigen Stickstoff-Schwefel-Düngers in eine KAS-Anlage am Beispiel eines Produktionsverbundes mit einer Nitrophosphatanlage (siehe Fig. 2 und 3)

Die Produktion eines kalkhaltigen Stickstoff-Schwefel-Düngers kann in diesen Komplex ohne große Umbaumaßnahmen integriert werden. Zur Herstellung eines solchen Düngemittels wird eine Einheit zur Herstellung von Ammonsulfatsalpeter-Schmelze oder -Lösung beispielsweise nach einem Verfahren ausgehend von Schwefelsäure und Ammoniak vorgeschaltet. Anschließend wird ausgehend von der erzeugten Ammonsulfatsalpeter-Schmelze/Lösung und von Kalk aus dem Nitrophosphatprozess ein erfindungsgemäßes Düngemittel hergestellt. Für die Erzeugung von Kalkammonsalpeter ebenso für ein erfindungsgemäßes Düngemittel können dieselben Apparate zur Granulation, Trocknung, Klassierung etc. verwendet werden; es sind unter Umständen lediglich Modifikationen erforderlich.

## Patentansprüche

1. Düngemittel, enthaltend einen Massenanteil Ammoniumsulfat, einen Massenanteil Ammoniumnitrat und einen Massenanteil umfassend Kalk und /oder ein Carbonat und/oder ein Hydrogencarbonat von Magnesium und/oder Calcium,
**dadurch gekennzeichnet,**
**dass** der Massenanteil umfassend Kalk und/oder ein Carbonat und/oder ein Hydrogencarbonat von Magnesium und/oder Calcium mindestens 5 bis 25 Massenprozent und der Massenanteil von Ammoniumsulfat mindestens 5 Massenprozent des Düngemittels beträgt.

2. Düngemittel nach Anspruch 1, **dadurch gekennzeichnet, dass** der Massenanteil von Ammoniumsulfat 30 bis 50 Massenprozent beträgt.

3. Düngemittel nach mindestens einem der vorstehenden Ansprüche, **dadurch gekennzeichnet, dass** weitere Zusatzstoffe wie Magnesium, Calciumnitrat, Zink, Eisen, Aluminium und/ oder Phosphate in einer Gesamtmenge von weniger als 5 Massenprozent enthalten sind.

4. Düngemittel nach mindestens einem der vorstehenden Ansprüche, **dadurch gekennzeichnet, dass** ein lösliches Magnesiumsalz im Düngemittel enthalten ist.

5. Düngemittel nach Anspruch 4, **dadurch gekennzeichnet, dass** der Massenanteil des löslichen Magnesiumsalzes gerechnet als Magnesiumoxid 1 % bis 4 % beträgt.

6. Düngemittel nach mindestens einem der vorstehenden Ansprüche, **dadurch gekennzeichnet, dass** das Düngemittel Ammoniumnitrat und Ammoniumsulfat als Doppelsalz 2 NH₄NO₃ * (NH₄)₂SO₄ enthält.

7. Düngemittel nach mindestens einem der vorstehenden Ansprüche, **gekennzeichnet dadurch, dass** der Gehalt an
- Gesamtstickstoff von 20 bis 30 Massenprozent
- Ammoniumstickstoff von 10 bis 25 Massenprozent
- Nitratstickstoff von 5 bis 10 Massenprozent
- Wasserlöslicher Schwefel von 3 bis 20 Massenprozent
- Kalk und / oder ein Carbonat und/oder ein Hydrogencarbonat von Magnesium und/oder Calcium von 1,5 bis 25 Massenprozent
im Bezug auf die Gesamtmasse des Düngemittels beträgt.

8. Verfahren zur Herstellung eines Düngemittels gemäß der Ansprüche 1 bis 7,
**dadurch gekennzeichnet, dass**
eine Schmelze oder Lösung von Ammoniumnitrat und Ammoniumsulfat mit Kalk und / oder ein Carbonat und/oder ein Hydrogencarbonat von Magnesium und/oder Calcium in einer Mischvorrichtung gemischt wird und anschließend durch Granulation der kalkhaltigen Suspension das Düngemittel gewonnen wird.

9. Verfahren gemäß Anspruch 8, **dadurch gekennzeichnet, dass** die Schmelze oder Lösung von Ammoniumnitrat und Ammoniumsulfat vor der Beimengung des Kalks neutralisiert wird.

10. Verfahren gemäß einem der Ansprüche 8 oder 9, **dadurch gekennzeichnet, dass** die Schmelze von Ammoniumnitrat und Ammoniumsulfat eine Doppelsalzschmelze ist, welche durch Neutralisation von Schwefelsäure mit Ammoniak in der Gegenwart von Ammoniumnitrat hergestellt wird.

11. Verfahren gemäß mindestens einem der Ansprüche 8 bis 10, **dadurch gekennzeichnet, dass** das Verfahren in eine Anlage zur kontinuierlichen Herstellung von Komplexdünger nach dem Nitrophosphatverfahren integriert ist.

12. Verfahren gemäß mindestens einem der Ansprüche 8 bis 11, **dadurch gekennzeichnet, dass** Kalk zu einer Schmelze von Ammoniumnitrat und Ammoniumsulfat im zwei Schritten gegeben wird, wobei ein Teil des Kalkes in der Mischapparatur zugegeben wird und ein weiterer Teil des Kalkes in einem nachfolgenden Verfahrensschritt in einem Granulationsapparat zugegeben wird.

13. Verfahren gemäß mindestens einem der Ansprüche 8 bis 11, **dadurch gekennzeichnet, dass** der gesamte Kalk in einem Schritt in den Granulationsapparat eingebracht wird.

14. Verfahren gemäß mindestens einem der Ansprüche 8 bis 13, **dadurch gekennzeichnet, dass** Kalk und festes Ammoniumsulfat in eine Ammoniumnitratschmelze eingebracht werden, und das Düngemittel durch Kompression zwischen rotierenden Walzen geformt wird.

15. Verfahren gemäß mindestens einem der Ansprüche 8 bis 14, **dadurch gekennzeichnet, dass** die Granulation der kalkhaltigen Suspension durch Aufsprühen auf ein Granulationsbett in einer rotierenden Trommel erfolgt.

## Claims

1. Fertilizer containing a mass fraction of ammonium sulphate, a mass fraction of ammonium nitrate and a mass fraction comprising lime and/or a carbonate and/or a hydrogen carbonate of magnesium and/or calcium,
**characterized in that**,
that the mass fraction comprising lime and/or a carbonate and/or a hydrogen carbonate of magnesium of and/or calcium comprises at least 5 to 25 mass % and the mass fraction of ammonium sulphate comprises at least 5 mass % of the fertilizer.

2. Fertilizer according to claim 1, **characterized in that** the mass fraction of ammonium sulphate comprises 30 to 50 mass %.

3. Fertilizer according to at least one of the preceding claims, **characterized in that** further additives like magnesium, calcium nitrate, zinc, iron, aluminium and/or phosphate are contained in a total amount of less than 5 mass %.

4. Fertilizer according to at least one of the preceding claims, **characterized in that** a soluble magnesium salt is contained in the fertilizer.

5. Fertilizer according to claim 4, **characterized in that** the mass fraction of the soluble magnesium salt is 1 % to 4 % calculated as magnesium oxide.

6. Fertilizer according to at least one of the preceding claims, **characterized in that** the fertilizer contains ammonium nitrate and ammonium sulphate as double salt 2 NH₄NO₃ * (NH₄)₂SO₄.

7. Fertilizer according to at least one of the preceding claims, **characterized in that** the amount in respect to the total mass of the fertilizer comprises
- total nitrogen of 20 to 30 mass %
- ammonium nitrogen of 10 to 25 mass %
- nitrate nitrogen of 5 to 10 mass %
- water soluble sulphate of 3 to 20 mass %
- lime and/or a carbonate and/or a hydrogen carbonate of magnesium and/or calcium of 1.5 to 25 mass %.

8. Method for producing a fertilizer according to the claims 1 to 7, **characterized in that** a melted mass or solution of ammonium nitrate and ammonium sulphate with lime and/or a carbonate and/or a hydrogen carbonate of magnesium and/or calcium is mixed in a mixing device and the fertilizer is subsequently obtained by granulating the lime containing suspension.

9. Method according to claim 8, **characterized in that** the melting mass or solution of ammonium nitrate and ammonium sulphate is neutralised before admixing the lime.

10. Method according to one of the claims 8 or 9, **characterized in that** the melting mass of ammonium nitrate and ammonium sulphate is a double salt melt which is obtained by neutralization of sulphuric acid with ammonia in the present of ammonium nitrate.

11. Method according to at one of the claims 8 to 10, **characterized in that** the method can be integrated in a facility for the continuing synthesis of complex fertilizer according to the nitro-phosphate-method.

12. Method according to at least of the claims 8 to 11, **characterized in that** the lime is added to a melting mass of ammonium nitrate and ammonium sulphate in two steps, whereby a part of the lime is added in the mixing device and a further part of the lime is added in a subsequent method step in a granulating device.

13. Method according to at least one of the claims 8 to 11, **characterized in that** the complete lime is introduced in one step into the granulating device.

14. Method according to at least one of the claims 8 to 13, **characterized in that** the lime and solid ammonium sulphate is inserted into a ammonium nitrate melt, and the fertilizer is formed by compression between rotating cylinders.

15. Method according to at least one of the claims 8 to 14, **characterized in that** the granulation of the lime containing suspension occurs by spraying thereof onto a granulating bed in a rotating drum.

## Revendications

1. Engrais contenant une fraction massique de sulfate d'ammonium, une fraction massique de nitrate d'ammonium et une fraction massique comprenant de la chaux et/ou un carbonate et/ou un hydrogénocarbonate de magnésium et/ou de calcium, **caractérisé en ce que** la fraction massique comprenant de la chaux et/ou un carbonate et/ou un hydrogénocarbonate de magnésium et/ou de calcium représente au moins 5 à 25 pourcent en masse et la fraction massique de sulfate d'ammonium représente au moins 5 pourcent en masse de l'engrais.

2. Engrais selon la revendication 1 **caractérisé en ce que** la fraction massique de sulfate d'ammonium représente 30 à 50 pourcent en masse.

3. Engrais selon au moins l'une des revendications précédentes **caractérisé en ce que** d'autres additifs comme le magnésium, le nitrate de calcium, le zinc, le fer, l'aluminium et/ou des phosphates sont contenus en une quantité totale inférieure à 5 pourcent en masse.

4. Engrais selon au moins l'une des revendications précédentes **caractérisé en ce qu'**un sel de magnésium soluble est contenu dans l'engrais.

5. Engrais selon la revendication 4 **caractérisé en ce que** la fraction massique du sel de magnésium soluble calculée en oxyde de magnésium est 1 % à 4%.

6. Engrais selon au moins l'une des revendications précédentes **caractérisé en ce que** l'engrais contient du nitrate d'ammonium et du sulfate d'ammonium sous forme de sel double 2 NH₄NO₃* (NH₄)₂SO₄.

7. Engrais selon au moins l'une des revendications précédentes **caractérisé en ce que** la teneur en
- azote total est de 20 à 30 pourcent en masse
- azote d'ammonium est de 10 à 25 pourcent en masse
- azote de nitrate est de 5 à 10 pourcent en masse
- soufre soluble dans l'eau est de 3 à 20 pourcent en masse
- chaux et/ou un carbonate et/ou un hydrogénocarbonate de magnésium et/ou de calcium est de 1,5 à 25 pourcent en masse
par rapport à la masse totale de l'engrais.

8. Procédé de production d'un engrais selon les revendications 1 à 7 **caractérisé en ce qu'**une masse fondue ou une solution de nitrate d'ammonium et de sulfate d'ammonium est mélangée avec de la chaux et/ou un carbonate et/ou un hydrogénocarbonate de magnésium et/ou de calcium dans un dispositif mélangeur puis l'engrais est obtenu par granulation de la suspension contenant de la chaux.

9. Procédé selon la revendication 8 **caractérisé en ce que** la masse fondue ou la solution de nitrate d'ammonium et de sulfate d'ammonium est neutralisée avant l'addition de la chaux.

10. Procédé selon l'une des revendications 8 et 9 **caractérisé en ce que** la masse fondue de nitrate d'ammonium et de sulfate d'ammonium est une masse fondue de sel double qui est produite par neutralisation de l'acide sulfurique avec l'ammoniac en présence de nitrate d'ammonium.

11. Procédé selon au moins l'une des revendications 8 à 10 **caractérisé en ce que** le procédé est intégré dans une installation pour la production continue d'engrais complexes selon le procédé au nitrophosphate.

12. Procédé selon au moins l'une des revendications 8 à 11 **caractérisé en ce que** de la chaux est ajoutée à une masse fondue de nitrate d'ammonium et de sulfate d'ammonium en deux étapes, où une partie de la chaux est ajoutée dans l'appareil mélangeur et une autre partie de la chaux est ajoutée dans une étape de procédé subséquente dans un appareil de granulation.

13. Procédé selon au moins l'une des revendications 8 à 11 **caractérisé en ce que** toute la chaux est introduite en une étape dans l'appareil de granulation.

14. Procédé selon au moins l'une des revendications 8 à 13 **caractérisé en ce que** de la chaux et du sulfate d'ammonium solide sont introduits dans une masse fondue de nitrate d'ammonium, et l'engrais est mis en forme par compression entre des cylindres rotatifs.

15. Procédé selon au moins l'une des revendications 8 à 14 **caractérisé en ce que** la granulation de la suspension contenant de la chaux a lieu par pulvérisation sur un lit de granulation dans un tambour rotatif.
